# EUROPÄISCHE PATENTSCHRIFT

(11) **EP 2 801 556 B1**
(45) Veröffentlichungstag und Bekanntmachung des Hinweises auf die Patenterteilung: **07.03.2018**
(21) Anmeldenummer: 14163646.4
(22) Anmeldetag: 04.04.2014
(51) Int. Cl.: C22C 33/02, C03C 17/36

(54) **Beschichtete Glaskeramikplatte**
Coated glass ceramic plate
Plaque vitrocéramique revêtue

(30) Priorität: 07.05.2013 DE 102013104702
(43) Veröffentlichungstag der Anmeldung: 12.11.2014
(73) Patentinhaber: Schott AG, 55122 Mainz (DE)
(72) Erfinder: Henn, Christian, 55546 Frei-Laubersheim (DE); Rudigier-Voigt, Eveline, 55128 Mainz (DE); Mangold, Stephanie, 55130 Laubenheim (DE); WOYWOD, Tanja, 55126 Mainz (DE)
(74) Vertreter: Blumbach · Zinngrebe Patent- und Rechtsanwälte

(56) Entgegenhaltungen:
- EP-A1- 0 226 993
- EP-A1- 2 559 672
- EP-A2- 0 183 052
- WO-A1-2012/131511

## Beschreibung

Die Erfindung betrifft dekorative Beschichtungen mittels Vakuumbeschichtung als Unterseitenbeschichtung von Glaskeramik-Kochfeldern, insbesondere für Gas und/ oder Induktionsanwendungen. Im Speziellen betrifft die Erfindung Barrierebeschichtungen für dekorative Beschichtungen.

Unterseitenbeschichtungen auf Glas- und Glaskeramiksubstraten werden heute unter anderem über Siebdruckverfahren hergestellt, wodurch sich insbesondere streuende und matte Schichten herstellen lassen. Durch die Verwendung von Lüsterfarben lassen sich metallisch aussehende Unterseitenbeschichtungen auftragen, welche in ihrer Anmutung einen Silber-metallischen Glanz mit sich bringen.

Die europäische Patentanmeldung EP 2 559 672 A1 beschreibt eine Glaskeramik-Kochplatte, deren eine Seite eine Nutzseite und die gegenüberliegende Seite die Unterseite bilden, wobei die Unterseite eine mehrschichtige Beschichtung aufweist, und wobei die mehrschichtige Beschichtung eine erste metallische Schicht aus Eisen/Edelstahl und eine dielektrische Trennschicht umfasst. Die metallische Schicht ist aus einem Material hergestellt, welches aus der Gruppe Silber (Ag), Gold (Au), Aluminium (A1), Molybdän(Mo), Kupfer (Cu), Nickel (Ni), Silizium (Si), Edelstahl (SSt), Titan (Ti), Niob (Nb), Tantal (Ta), Wolfram (W), Palladium oder einer Legierung oder Mischung aus zwei oder mehreren dieser Metalle, ausgewählt ist. Die dielektrische Trennschicht ist aus einem Material hergestellt, welches aus der Gruppe, die aus Zinnoxiden, Zinkoxiden, Aluminiumoxiden, Titanoxiden, Siliziumoxiden, Nickeloxiden, Chromoxiden, Nioboxiden, Tantaloxiden oder Mischungen davon besteht, ausgewählt ist. Die internationale Patentanmeldung WO 2012/131511 A1, betrifft eine Kochfeldplatte mit einer Grundplatte, an deren Unterseite eine Beschichtung mit metallischen Schichten und dielektrischen Schichten ausgebildet ist, wobei die Beschichtung zumindest zwei metallische Schichten und zumindest zwei dielektrische Schichten umfasst. Die Schichten der Beschichtung sind durch Magnetronsputtern auf der Unterseite ausgebildet, das Material weist eine metallische Schicht aus SSt ("Stainless Steel"; Edelstahl), Mo, Ni, Cr, Nd, V, Ti, Ta, Si, AI, Cu, W, oder einer Verbindung von zumindest zwei der genannten Elemente auf. Bezüglich des Materials der dielektrischen Schicht ist vorzugsweise vorgesehen, dass dieses SnOₓ, ZnOₓ, TiOₓ, AIOₓ, SiO_{x,} NbOₓ, TaOₓ, SiNₓ, AINₓ, TiNₓ, CrNₓ, oder eine Verbindung von zumindest zwei der genannten Verbindungen aufweist. Metallisch reflektierende Oberflächen sind heute im Bereich der Küche häufig als Türfronten zu finden. Im Bereich der Kochflächen sind diese Farben aber eher selten, da diese entweder sehr teuer über Edelmetallfarben (z.B. Pt) aufgedruckt werden müssen oder vakuumbeschichtete Lösungen nicht ausreichend thermisch beständig sind.

Ebenfalls bekannt sind gesputterte dielektrische Interferenzschichtsysteme, über welche durch die Variation der Schichtdicke einer hochbrechenden Schicht der Farbort der Unterseitenbeschichtung schnell und einfach variiert werden kann, ohne das signifikante Prozessänderungen vorgenommen werden müssen. Um solche interferenzoptischen Systeme auch unter den starken thermischen Einflüssen bei dem Einsatz als Unterseitenbeschichtung (400-500°C) beständig zu bekommen, unterliegen diese Schichtsysteme bestimmten Einschränkungen hinsichtlich der möglichen Materialkombinationen. Zum Beispiel sind farbgebende Schicht, Deckschicht und Barriereschicht aus dem gleichen Trägermaterial, um Diffusionsvorgänge optisch unauffällig zu machen. Zum Beispiel gelingt dies mit einem SiN-Si-SiN Schichtsystem. Hierbei werden Diffusionsvorgänge des Siliziums optisch nur geringfügig wahrgenommen, sofern die Deckschicht ausreichend dick und optisch inaktiv bleibt.

Mischsysteme aus Oxiden und Nitriden sind meist aufgrund einer Diffusion des Sauerstoffs in die Deckschicht nachteilig, da dies zu einer Oxidation und damit einer Veränderung der Farbe führt. Da aber oxidische Schichten aufgrund ihrer hohen Brechzahlen ideal als farbgebende Schichten geeignet sind (z.B. Ti0₂ mit Brechzahl n>2,45, Nb₂0₅ mit Brechzahl n=2,35, Ta₂0₅ mit Brechzahl n=2,25), stellt sich die Aufgabe einer thermisch beständigen und stabilen Deckschicht, welche resistent gegenüber Sauerstoffdiffusionsvorgänge ist, um neue Farben für Unterseitenbeschichtungen nutzen zu können.

Ähnliche Systeme auf Basis einer Herstellung im Vakuum arbeiten über eine intrinsische Farbgebung. Bekannt und häufig genannt ist TiN, welches zum Beispiel in der Form eines TiN-Ti oder TiN-Ti-TiN Schichtsystems eingesetzt wird. Hierbei werden Diffusionsvorgänge des Stickstoffs in die mittlere Deckschicht optisch nicht wahrgenommen, da TiN eine bestimmte Eigenfarbe (goldfarben) mit sich bringt und Schichtdickenänderungen damit nicht oder nur geringfügig wahrnehmen lassen. Allerdings besteht der Bedarf an weiteren neuen Farben.

Der Erfindung liegt daher die Aufgabe zugrunde, die Farbpalette von dekorativen Unterseitenbeschichtungen zu erweitern und dabei auch eine hohe thermische Beständigkeit der Beschichtung zu gewährleisten. Der Farbort der Beschichtung sollte sich auch nach längerer thermischer Belastung, wie sie im Betrieb eines Kochfelds auftritt, allenfalls so wenig ändern, dass die Farbänderung nicht ins Auge fällt. Zudem sollte die Beschichtung einfach und kostengünstig herstellbar sein.

Diese Aufgabe wird durch den Gegenstand der unabhängigen Ansprüche gelöst. Vorteilhafte Ausgestaltungen und Weiterbildungen sind in den jeweiligen abhängigen Ansprüchen angegeben.

Demgemäß sieht die Erfindung eine beschichtete Glaskeramik-Kochplatte vor, deren eine Seite eine Nutzseite und die gegenüberliegende Seite die Unterseite bilden. Die Unterseite weist eine mehrschichtige Beschichtung auf. Die mehrschichtige Beschichtung umfasst eine metallische Schicht einer Legierung mit den Bestandteilen Chrom, Eisen, Nickel und Silizium. Der Silizium-Gehalt der Legierung beträgt mindestens 1,5 Atomprozent (at%), beziehungsweise Molprozent, vorzugsweise mindestens 2 at%. Die metallische Schicht ist mit einer Barriereschicht in Form eines Oxids einer Legierung mit den Bestandteilen Chrom, Eisen, Nickel und Silizium, deren Silizium-Gehalt mindestens 1,5 Atomprozent, vorzugsweise mindestens 2 Atomprozent beträgt, abgedeckt. Dabei ist der molare Sauerstoffgehalt der Barriereschicht mindestens um einen Faktor 10 höher, als in der metallischen Schicht.

Bei einem Glaskeramik-Kochfeld mit einer erfindungsgemäßen Glaskeramik-Kochplatte ist die Nutzseite die Oberseite, auf welcher beispielsweise Gargefäße, wie Pfannen und Töpfe aufgestellt werden, oder auf der eine Gasbrenner-Anordnung befestigt ist.

Die für die metallische Schicht und die Barriereschicht verwendeten Legierungen sind Edelstähle mit einem für Stähle verhältnismäßig hohen Siliziumgehalt. Gemäß einer Ausführungsform der Erfindung ist die metallische Schicht direkt auf der Glaskeramik abgeschieden. Gemäß dieser Ausführungsform ist demgemäß eine Grenzfläche zwischen der Glaskeramik und der metallischen Schicht vorhanden. Die metallische Schicht mit der Zusammensetzung gemäß der Erfindung haftet gut auf der Glaskeramik und zusammen mit der Barriereschicht werden auch gute thermische Beständigkeiten erzielt.

Allerdings ergibt sich eine Beschränkung hinsichtlich des Farborts, der festgelegt ist durch die von der Transmission des Lichts durch die Glaskeramik und die Reflexion an der metallischen Schicht. Um bestimmte Farborte, beziehungsweise bestimmte Farbeindrücke zu erzeugen, ist daher in Weiterbildung der Erfindung vorgesehen, dass die mehrschichtige Beschichtung eine zumindest teiltransparente, ein- oder mehrlagige Schicht als erste Schicht auf der Glaskeramik aufweist, wobei auf dieser ersten, zumindest teiltransparenten Schicht die metallische Schicht abgeschieden ist.

Die metallische Schicht sorgt durch die metallische Reflexion für einen metallischen Effekt, entsprechend einer Edelstahloberfläche. Die optionale erste, zumindest semitransparente Schicht wird als Farbanpassungsschicht oder Färbungsschicht verwendet, um eine durch die Glaskeramik hervorgerufene Färbung auszugleichen oder einen neuen Farbeindruck zu erhalten.

Es hat sich gezeigt, dass der vergleichsweise hohe Siliziumgehalt offenbar für eine besonders hohe Temperaturbeständigkeit sorgt. Insbesondere werden mit einer solchen Beschichtung sehr gute Beständigkeiten hinsichtlich des Farborts auch nach langer Temperaturbelastung erzielt. Insbesondere hat sich auch überraschend herausgestellt, dass ein Oxid einer solchen Edelstahllegierung wiederum eine sehr wirksame Barriere bildet, welche die metallische Schicht vor Diffusion, Oxidation und Reaktionen mit Säuren oder Laugen schützt.

Da die Barrierebeschichtung aus demselben oder einem ähnlichen, oxidierten Material wie die metallische Schicht ist, sorgt dies für eine sehr gute, mechanische sehr stabile Verbindung dieser beiden Schichten.

Die erfindungsgemäß verwendeten Edelstahl-Legierungen lässt sich sehr gut durch Sputtern abscheiden. Demgemäß betrifft die Erfindung auch ein Verfahren zur Herstellung einer Glaskeramik-Kochplatte mit den Schritten
- Bereitstellen einer Glaskeramik-Platte,
- Aufsputtern einer metallischen Schicht einer Legierung mit den Bestandteilen Chrom, Eisen, Nickel und Silizium, wobei der Silizium-Gehalt der Legierung mindestens 2 Atomprozent beträgt,
- Herstellen einer Barriereschicht, welche die metallische Schicht bedeckt, in Form eines Oxids einer Legierung mit den Bestandteilen Chrom, Eisen, Nickel und Silizium, deren Silizium-Gehalt mindestens 2 Atomprozent beträgt, wobei der molare Sauerstoffgehalt der Barriereschicht (13) mindestens um einen Faktor 10 höher ist, als in der metallischen Schicht.

Gemäß einer bevorzugten Ausführungsform wird vor dem Abscheiden der metallischen Schicht die bereits oben erwähnte erste, zumindest teiltransparente, ein- oder mehrlagige Schicht auf der Glaskeramik abgeschieden. Diese erste Schicht dient zur Farbanpassung, beziehungsweise zum Farbausgleich dient.

Die Barriereschicht kann in einfacher Weise durch reaktives Sputtern eines Komposit-Targets, insbesondere eines Edelstahl-Targets in einer sauerstoffhaltigen Atmosphäre abgeschieden werden. Gemäß einer weiteren, alternativen oder zusätzlichen Ausführungsform kann die Barriereschicht auch durch Oxidation der Oberfläche der metallischen Schicht erzeugt werden.

Es bietet sich weiterhin an, auch die erste Schicht durch Sputtern abzuscheiden. Auf diese Weise können die erste Schicht, die metallische Schicht und die Barriereschicht gegebenenfalls auch in einem einzelnen Vakuumabscheideprozess ohne zwischenzeitliches Belüften abgeschieden werden.

Es ist möglich, unterschiedliche Legierungen für die metallische Schicht und die Barriereschicht zu verwenden, wobei beide Schichten den oben genannten hohen Siliziumgehalt aufweisen. Besonders günstig ist es aber, wenn die Barriereschicht aus einem Oxid der Legierung der metallischen Schicht gebildet ist. Auf diese Weise können beide Schichten aus dem gleichen Legierungsmaterial, etwa durch Sputtern eines Edelstahl-Targets abgeschieden werden, was den Herstellungsprozess sehr vereinfacht.

Gemäß einer Weiterbildung der Erfindung kann die Barriereschicht als Gradientenschicht mit variierendem Sauerstoffgehalt ausgebildet werden, indem der Sauerstoffgehalt der Barriereschicht in Richtung senkrecht zur Schicht und zur metallischen Schicht hin kontinuierlich abnimmt. Die Barriereschicht geht auf diese Weise ohne scharfe Grenzfläche in die metallische Schicht über. Dies ist günstig, um die Haftung des Oxids auf der metallischen Legierung der metallischen Schicht weiter zu verbessern.

Gemäß einer Ausführungsform der Erfindung umfasst die erste Schicht eine TiO₂-Lage. Titanoxid in geeigneter Dicke, vorzugsweise kleiner als 100 Nanometern eignet sich gut zur Farbanpassung, da durch den hohen Brechwert und damit immer noch nennenswerten Brechwertunterschied zur Glaskeramik eine wirksame interferenzoptische Farbänderung erzielt werden kann. Neben TiO₂ sind aber auch andere Oxide mit hohem Brechungsindex, insbesondere mit einem Brechungsindex größer als zwei als Schichtbestandteil möglich. Demgemäß ist in Weiterbildung der Erfindung vorgesehen, dass die erste Schicht zumindest eines der Materialien Nb₂O₅, Ta₂O₅, Si₃N₄, ZrO₂, TiO₂ enthält

Gemäß noch einer Ausführungsform der Erfindung umfasst oder besteht die erste Schicht aus einer Lage aus einem Oxid der Legierung der metallischen Schicht. Es hat sich gezeigt, dass auch das Oxid der Edelstahl-Legierung als Farbanpassungsschicht geeignet ist. Auch hier bietet sich wie bei der erfindungsgemäßen Barriereschicht aus dem Oxid der Edelstahllegierung der Vorteil einer einfachen Herstellung, da das gleiche Sputtertarget verwendet werden kann, sowie auch einem besonders stabilen mechanischen Verbund von erster und metallischen Schicht. Gegebenenfalls können auch eine solche Edelstahloxid-Lage mit einer Lage eines anderen Materials, wie dem oben genannten Titanoxid kombiniert werden. Typischerweise wird im Falle eines Edelstahloxids aufgrund des im Vergleich zu Titanoxid niedrigeren Brechungsindex eine größere Schichtdicke für die erste Schicht verwendet. Im Allgemeinen weist die erste Schicht aber vorzugsweise eine Schichtdicke von weniger als 400 Nanometern auf. Diese Ausführungsform ist aufgrund der einfachen Herstellung günstig, denn es können die erste Schicht, die metallische Schicht und auch die Barriereschicht mit nur einem Target hergestellt werden. Außerdem bildet der Schichtbestandteil Chromoxid der oxidierten Edelstahlschicht einen sehr guten Haftvermittler zur Glaskeramik.

Ebenso wie bei der Barriereschicht ist es auch bei der ersten Schicht möglich, diese als Gradientenschicht auszubilden. Auch hier nimmt der Sauerstoffgehalt in Richtung senkrecht zur Schicht und zur metallischen Schicht hin kontinuierlich ab. Damit wird aufgrund des hohen Sauerstoffgehalts an der Grenzfläche zur oxidischen Glaskeramik eine gute Anhaftung zur Glaskeramik-Unterseite und ebenso aufgrund des niedrigen Sauerstoffgehalts eine gute Anhaftung zur metallischen Schicht hin erzielt. Auch hier wird auf diese Weise eine scharfe Grenzfläche zwischen erster und metallischer Schicht vermieden.

Zur Herstellung kann die erste Schicht oder die Barriereschicht durch Aufsputtern vom gleichen Sputtertarget, welches auch für die Abscheidung der metallischen Schicht verwendet wird, abgeschieden werden, wobei während des Aufsputterns der Sauerstoffgehalt des Prozessgases variiert wird, so dass eine Gradientenschicht ausgebildet wird, welche einen in Richtung zur metallischen Schicht hin abnehmenden Sauerstoffgehalt aufweist.

Weiterhin ist es dabei gemäß einer Ausführungsform der Erfindung auch möglich, sowohl die erste Schicht, als auch die Barriereschicht als Gradientenschichten auszubilden. Demgemäß ist dazu vorgesehen, dass die erste Schicht und die Barriereschicht beide als Gradientenschichten mit variierendem Sauerstoffgehalt ausgebildet sind und die erste Schicht und die Barriereschicht in die metallischen Schicht ohne Grenzflächen, oder mit anderen Worten kontinuierlich ineinander übergehen.

Besonders bevorzugt wird für die Legierung der metallischen Schicht eine Zusammensetzung mit folgenden Bestandteilen:
Silizium: 2 - 5 At%,
Chrom: 22,0 - 28,0 At%,
Nickel: 15,0 - 21,0 At%,
Eisen: 48 - 56,0 At%.

Vorzugsweise ist weiterhin der Kohlenstoff-Gehalt der metallischen Schicht kleiner als 0,3 At%.

Es wird weiterhin ein Edelstahl für die metallischen Schicht bevorzugt, welcher eine Austenit-Kristallstruktur aufweist oder ausbildet. Diese Stähle erweisen sich als besonders stabil gegenüber temperaturbedingten Farbänderungen.

Gemäß noch einer Ausführungsform der Erfindung kann die Legierung Aluminium enthalten, wobei ein Gehalt bis zu 3 At% bevorzugt wird. Auch Aluminium kann in geringen Mengen die Temperaturbeständigkeit der abgeschiedenen Schicht verbessern.

Es hat sich weiterhin als günstig erwiesen, wenn die Barriereschicht nach der Abscheidung getempert wird. Diese Temperung erweist sich für eine nachträgliche Verdichtung der Schicht als besonders wirksam, wenn die Erwärmung nur oberflächlich erfolgt, so dass ein großer Temperaturgradient in Richtung senkrecht zur mehrschichtigen Beschichtung entsteht. Demgemäß ist in Weiterbildung des erfindungsgemäßen Verfahrens vorgesehen, dass die mehrschichtige Beschichtung mit der Barriereschicht mit einer oberflächlichen Erwärmung nachbehandelt wird, so dass ein Temperaturgradient innerhalb der obersten 100 Nanometern der Beschichtung von mindestens 200 K auftritt. Solche hohen Temperaturgradienten können durch Bestrahlen mit einer Strahlungsquelle, deren Strahlung direkt in der Oberfläche absorbiert wird, erzielt werden. Hierzu kommen vor allem Laser, Halogenlampen, oder UV-Lampen in Frage.

Die Erfindung wird nachfolgend anhand von Ausführungsbeispielen und unter Bezugnahme auf die beigeschlossenen Zeichnungen näher erläutert. In den Zeichnungen verweisen dabei gleiche Bezugszeichen auf gleiche oder entsprechende Elemente. Es zeigen:
- Fig. 1: in schematischer Schnittdarstellung eine beschichtete Glaskeramik-Kochplatte,
- Fig. 2: eine Weiterbildung der in Fig. 1 gezeigten Ausführungsform,
- Fig. 3: eine SIMS-Tiefenprofilanalyse der Unterseitenbeschichtung einer Glaskeramik-Kochplatte,
- Fig. 4: eine rasterelektronische Aufnahme einer Bruchkante dieser Glaskeramik-Kochplatte,
- Fig. 5: eine SIMS-Tiefenprofilanalyse der Unterseitenbeschichtung einer weiteren Ausführungsform einer Glaskeramik-Kochplatte mit einer Edelstahloxid-Farbanpassungsschicht,
- Fig. 6: eine rasterelektronische Aufnahme einer Bruchkante der Probe, welche für die in Fig. 5 gezeigte Messung verwendet wurde,
- Fig. 7: eine SIMS-Tiefenprofilanalyse einer Unterseitenbeschichtung einer Ausführungsform mit als Gradientenschichten ausgebildeter Farbanpassungsschicht und Barriereschicht,
- Fig. 8: eine rasterelektronische Aufnahme einer Bruchkante der Probe, welche für die in Fig. 7 gezeigte Messung verwendet wurde,
- Fig. 9: eine SIMS- Tiefenprofilanalyse einer Unterseitenbeschichtung vor und nach einer Temperaturbelastung,
- Fig. 10: eine SIMS- Tiefenprofilanalyse einer Unterseitenbeschichtung vor und nach einer Temperaturbelastung, wobei bei der Unterseitenbeschichtung die Edelstahl-Oxidschicht durch eine Edelstahl-Nitridschicht ersetzt ist, und
- Fig. 11: eine SIMS- Tiefenprofilanalyse einer Unterseitenbeschichtung vor und nach einer Temperaturbelastung, wobei die metallische Schicht der Unterseitenbeschichtung direkt auf der Glaskeramik abgeschieden ist.

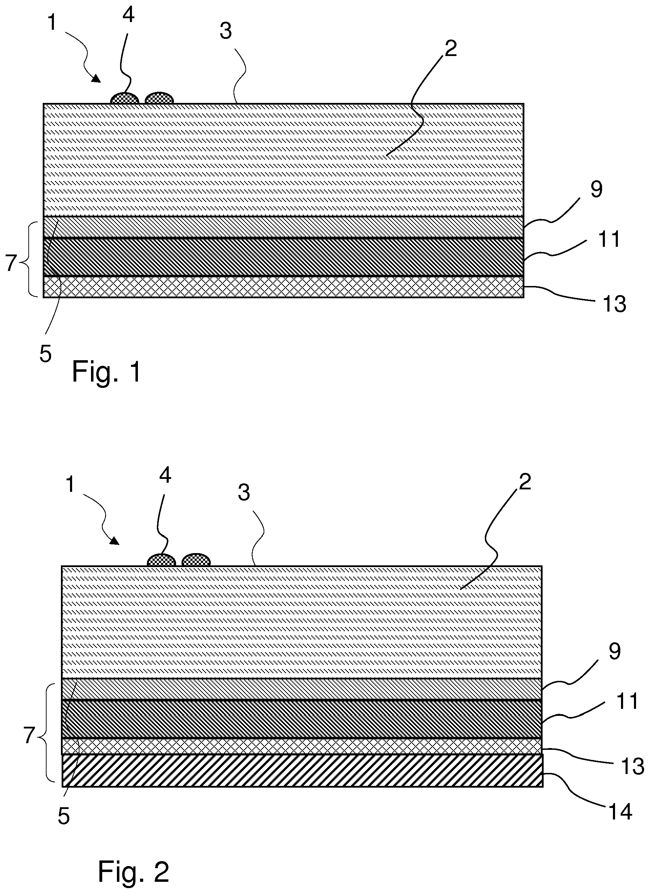

Bei der in Fig. 1 gezeigten beschichteten Glaskeramik-Kochplatte 1 bildet eine Seite 3 eine Nutzseite, welche im eingebauten Zustand die Oberseite eines Kochfelds bildet. Auf der Oberseite kann ein Dekor 4 aufgebracht sein, beispielsweise in Form von Beschriftungen, Symbolen, oder um die Heißzone oder Anzeigenbereiche zu kennzeichnen.

Die gegenüberliegende Seite 5 der Glaskeramik-Kochplatte 1 bildet die Unterseite, welche im eingebauten Zustand den Unterbau des Kochfelds abdeckt. Um einen solchen Unterbau, wie etwa elektrische Einrichtungen und/oder Gasleitungen optisch zu verbergen, ist die Unterseite 5 mit einer mehrschichtigen, licht-undurchlässigen Beschichtung 7 versehen. Diese mehrschichtige Beschichtung 7 auf der Glaskeramik 2 der Glaskeramik-Kochplatte 1 umfasst eine erste, zumindest teiltransparente Schicht 9, die ein- oder mehrlagig ausgeführt sein kann. Gemäß einer Ausführungsform der Erfindung umfasst die erste Schicht 9 eine TitanoxidSchicht (TiO₂).

Auf dieser ersten, zumindest teiltransparenten Schicht ist eine lichtundurchlässige metallische Schicht 11 aus einer Legierung mit den Bestandteilen Chrom, Eisen, Nickel und Silizium abgeschieden. Die Schicht weist die oben genannten Zusammensetzung auf. Demnach beträgt der Silizium-Gehalt der Legierung dieser Schicht 11 mindestens 2 Atomprozent, der Gehalt an Chrom liegt zwischen 22,0 und 28,0 At%, der Gehalt von Nickel zwischen 15,0 und 21,0 At% und der Eisen-Gehalt beträgt 48 bis 56,0 At%.

Auf dieser zweiten, metallischen Schicht 11 ist eine Barriereschicht 13 in Form eines Oxids einer Legierung mit den Bestandteilen Chrom, Eisen, Nickel und Silizium, deren Silizium-Gehalt ebenfalls mindestens 2 Atomprozent beträgt abgeschieden, so dass die metallische Schicht 11 abgedeckt ist. Die Barriereschicht 13 stellt eine Oxidschicht der Legierung dar, wobei der molare Sauerstoffgehalt der Barriereschicht 13 mindestens um einen Faktor 10 höher ist, als der molare Sauerstoffgehalt der metallischen Schicht 11. Vorzugsweise wird aufgrund der vereinfachten Herstellung die gleiche Legierung wie für die metallischen Schicht verwendet. Demgemäß ist hier die Barriereschicht 13 aus einem Oxid der Legierung der metallischen Schicht 11 gebildet.

Gemäß einer Ausführungsform der Erfindung können die metallische Schicht 11 und die Barriereschicht 13 auch kontinuierlich ineinander übergehen, so dass keine scharfe Grenzfläche zwischen den beiden Schichten 11, 13 ausgebildet ist. Dazu wird die Barriereschicht 13 als Gradientenschicht mit zur metallischen Schicht hin abnehmendem Sauerstoffgehalt abgeschieden. Bei der Abscheidung bedeutet dies selbstverständlich umgekehrt, dass der Sauerstoffgehalt der Schicht kontinuierlich oder quasikontinuierlich erhöht wird.

Gegebenenfalls kann eine Barriereschicht auch mehrschichtig ausgebildet werden, wobei in diesem Fall nur die an die metallischen Schicht 11 angrenzende Barriereschicht eine Edelstahloxid-Schicht sein muss. Diese Schicht kann dann mit einer weiteren Barriereschicht aus einem anderen Material, wie beispielsweise Siliziumoxid abgedeckt werden. Allgemein, ohne Beschränkung auf die speziellen Ausführungsbeispiele, wie sie in den Figuren dargestellt sind, ist gemäß noch einer Ausführungsform der Erfindung also eine weitere Barriereschicht aus einem von der an die metallischen Schicht 11 angrenzenden Barriereschicht 13 verschiedenen Material vorgesehen. Diese Ausführungsform ist von Vorteil, um eine höhere chemische Beständigkeit und bessere Barrierewirkung gegenüber unterschiedlichen Stoffe zu erhalten. So können zwei verschiedene Barriereschichtmaterialien sowohl die Säuren-, als auch die Laugenbeständigkeit erhöhen. Ein weiterer Vorteil ist, dass die Edelstahloxid-Barriereschicht 13 gleichzeitig als Haftvermittler für die weitere Barriereschicht und der metallischen Schicht dienen kann.

Fig. 2 zeigt eine solche Weiterbildung der in Fig. 1 dargestellten Ausführungsform. Der Aufbau der Schichten 9, 11, 13 entspricht der in Fig. 1 gezeigten Ausführungsform. Zusätzlich umfasst die mehrschichtige Beschichtung 7 hier eine zweite Barriereschicht 14, welche auf der Barriereschicht 13 abgeschieden ist. Für die zweite Barriereschicht 14 eignet sich beispielsweise Siliziumoxid, welches eine hohe Barrierewirkung und zusätzlich eine hohe Säurenbeständigkeit aufweist. Außerdem haftet dieses Material sehr gut auf dem Edelstahloxid der Barriereschicht 13.

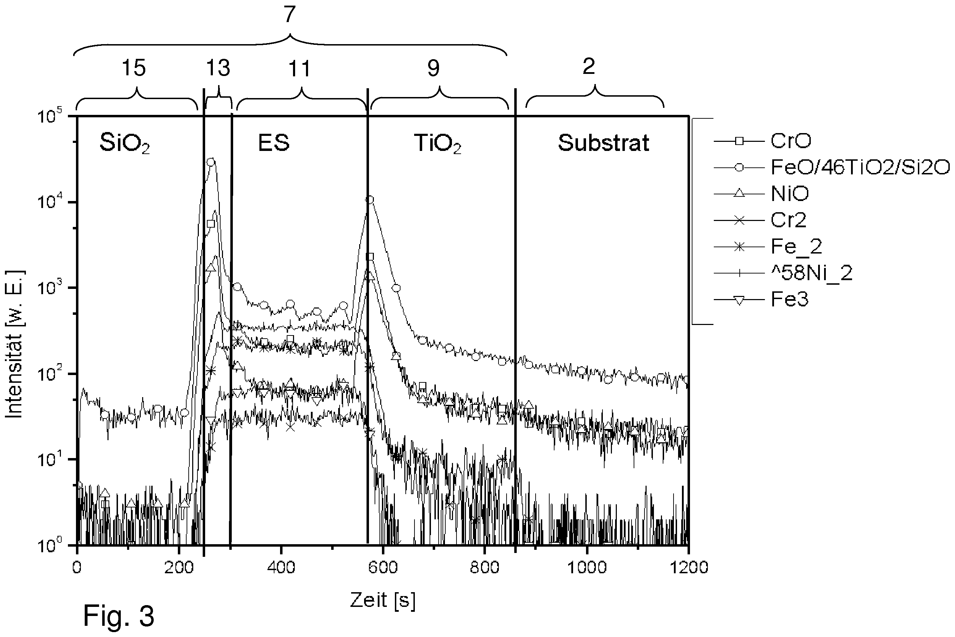

In Fig. 3 ist eine Sekundärionen-Massenspektroskopie-Analyse (SIMS-Analyse) an einer erfindungsgemäßen mehrschichtigen Beschichtung 7 auf einer Glaskeramik dargestellt. Das Diagramm zeigt die Intensität verschiedener abgesputterter Schichtbestandteile, wie CrO, NiO, Fe₂, als Funktion der Sputterzeit.

Die Beschichtung 7 umfasst als erste, transparente und zur Farbanpassung dienende Schicht 9 eine Titanoxidschicht. Auf der Titanoxidschicht ist eine Edelstahlschicht mit der erfindungsgemäßen Zusammensetzung als metallische Schicht 11 abgeschieden. Die abgeschiedene Schicht ist oberflächlich nachträglich oxidiert, so dass sich eine Oxidschicht der Edelstahllegierung als Barriereschicht 13 ausbildet. Ohne Beschränkung auf das spezielle, in Fig. 3 dargestellte Ausführungsbeispiel ist daher gemäß einer Ausführungsform der Erfindung vorgesehen, dass die metallische Schicht 11 und die Barriereschicht (13) hergestellt werden, indem eine metallische Schicht 11 aufgesputtert und anschließend die metallische Schicht 11 an ihrer Oberfläche oxidiert wird.

Auf dieser Barriereschicht 13 ist eine weitere Barriereschicht 14 in Form einer SiO₂-Schicht abgeschieden. Die Schichtdicken der TiO₂-Schicht, der Edelstahlschicht und der SiO₂-Schicht betragen jeweils 100 Nanometer.

Die Barriereschicht 13 ist im SIMS-Profil deutlich an der Überhöhung der Intensität der Bestandteile NiO (Kurve mit als aufrechte Dreiecke dargestellte Messwerte), CrO (Kurve mit als Quadrate dargestellte Messwerte), und FeO (Kurve mit als Kreise dargestellte Messwerte) zu erkennen. Die Überhöhung beträgt bei allen diesen Bestanteilen gegenüber dem Schichtvolumen der metallischen Schicht 11 mehr als eine Größenordnung. Demgemäß ist der Sauerstoffgehalt in der Barriereschicht 13 mindestens einen Faktor 10 größer als in der metallischen Schicht. Die Barriereschicht 13 dient hierbei nicht nur als Barriere, sondern auch als Haftvermittler für die weitere Barriereschicht 14. Die

Kombination des Edelstahloxids mit einer Siliziumoxidschicht ist außerdem für die chemische Beständigkeit der Beschichtung 7 von Vorteil. So können die unterschiedlichen chemischen Resistenzen der beiden Barriereschichten 13, 14 zusammenwirken, um die metallische Schicht vor einem chemischen Angriff zu schützen. Siliziumoxid weist beispielsweise eine hohe Beständigkeit gegen Säuren auf, wird aber von alkalischen Stoffen angegriffen. Demgegenüber ist das Edelstahloxid der Barriereschicht 13 sehr beständig gegenüber Laugen.

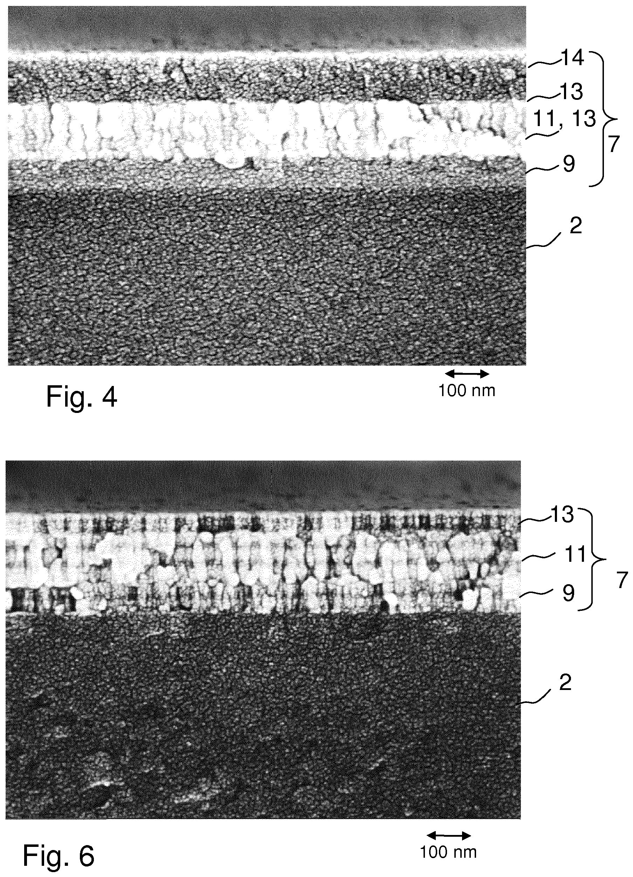

Fig. 4 zeigt eine rasterelektronenmikroskopische Aufnahme des Querschnitts der beschichteten Glaskeramik-Kochplatte an einer Bruchkante. Die Schichten 9 und 14 sind deutlich anhand der unterschiedlichen Helligkeit von den aus einer Edelstahllegierung hergestellten Schichten 11 und 13 zu unterscheiden. Zwischen der Schicht 11 und der Barriereschicht 13 ist hingegen kein deutlicher Kontrast zu erkennen, da diese bis auf den in der Barriereschicht enthaltenen Sauerstoff chemisch gleich zusammengesetzt sind.

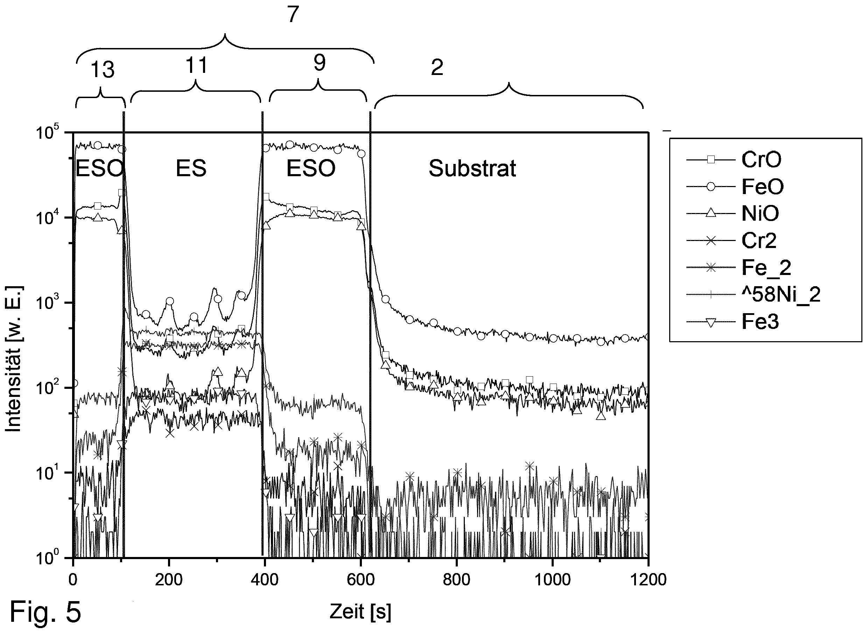

Fig. 5 zeigt eine SIMS-Tiefenprofilanalyse der Unterseitenbeschichtung gemäß einer weiteren Ausführungsform der Erfindung. Diese Ausführungsform basiert darauf, dass die erste Schicht 9 aus einem Oxid der Legierung der metallischen Schicht 11 hergestellt ist. Mit anderen Worten ist hier die TiO₂-Farbanpassungsschicht der Ausführungsbeispiele gemäß Fig. 3 und Fig. 4 durch eine transparente oder zumindest semitransparente Edelstahloxid-Farbanpassungsschicht ersetzt. Die Schichtabfolge ist hier im Speziellen eine 200 Nanometer dicke erste Schicht 9, auf der eine ebenfalls 200 Nanometer dicke metallische Schicht 11 abgeschieden ist. Eine Schichtdicke der ersten Schicht 9 von weniger als 400 Nanometern ist demgemäß auch bei Verwendung von Edelstahloxid zur Erzielung einer Farbanpassung ausreichend.

Die auf der metallischen Schicht 11 abgeschiedene Barriereschicht 13 besteht ebenfalls wie die transparente erste Schicht 9 aus dem Oxid des Materials der metallischen Schicht 11. Die Schichtdicke der Barriereschicht 13 beträgt 100 Nanometer.

Im Unterschied zum vorhergehenden Beispiel der Fig. 3 und Fig. 4 sind die Edelstahloxid-Schichten durch reaktives Sputtern des Edelstahl-Targets in einer sauerstoffhaltigen Atmosphäre hergestellt. Die Oxidation erfolgt also nicht nachträglich, sondern bereits während der Abscheidung. Diese Ausführungsform der Erfindung bietet den besonderen Vorteil, dass alle Schichten 9 bis 13 in einem einzelnen Sputterprozess herstellbar sind, ohne dass ein Wechsel des Sputtertargets erfolgen muss. Zudem ist diese Ausführungsform vorteilhaft aufgrund der sehr guten Haftung der Schichten 9 und 13 an der metallischen Schicht 11 einerseits und am Glaskeramik-Material 2 andererseits. Eine gute Anhaftung der Schichten ist insbesondere auch im Hinblick auf die sehr unterschiedlichen Temperaturausdehnungskoeffizienten von Edelstahl und Glaskeramik-Platte günstig, um im Betrieb und bei Temperaturbelastung der Glaskeramik-Kochplatte Delaminationen der Unterseitenbeschichtung 7 zu vermeiden. Ebenso wie bei dem Ausführungsbeispiel der Fig. 3 sind im SIMS-Profil die Edelstahloxid-Schichten, nämlich hier die erste Schicht 9 und die Barriereschicht 13 durch das gegenüber der metallischen Schicht 11 um mehr als einen Faktor 10 höhere Signal oxidischer Bestandteile gut zu erkennen.

Fig. 6 zeigt eine rasterelektronenmikroskopische Aufnahme einer Bruchkante der Probe, die der Messung aus Fig. 5 zugrunde lag. Die Edelstahloxid-Schichten, nämlich die Schichten 9 und 13 können hier noch von der metallischen Schicht 11 unterschieden werden. Der Kontrast ist zwar fast gleich, allerdings zeigt die metallische Schicht 11 eine etwas grobkörnigere Struktur.

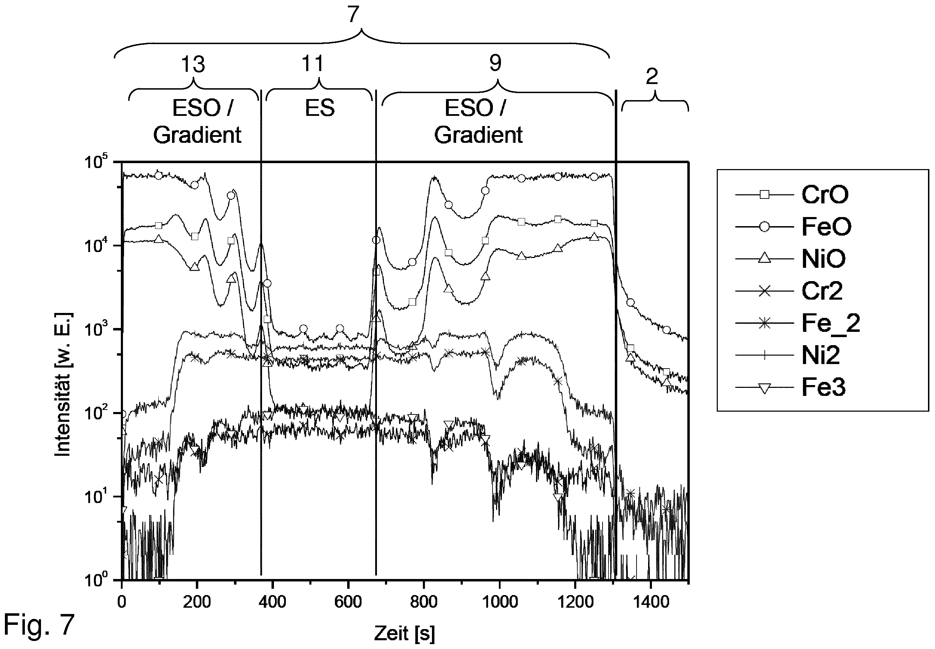

Nachfolgend wird ein Ausführungsbeispiel erläutert, bei welchem die erste Schicht 9 und die Barriereschicht 13 ebenfalls aus dem Oxid der Legierung der metallischen Schicht 11 gebildet sind. In Abwandlung der Ausführungsform gemäß den Fig. 5 und 6 sind die erste Schicht 9 und die Barriereschicht 13 aber beide als Gradientenschichten mit variierendem Sauerstoffgehalt ausgebildet, wobei die erste Schicht 9 und die Barriereschicht 13 in die metallische Schicht 11 ohne Grenzflächen, beziehungsweise kontinuierlich übergehen. Fig. 7 zeigt das SIMS-Profil einer solchen mehrschichtigen Beschichtung 7. Wie anhand der Intensitäten der sauerstoffhaltigen Schichtbestandteile CrO, FeO, NiO zu erkennen ist, weisen die Schichten 9 und 13 einen Bereich mit einem konstanten Sauerstoffgehalt auf, an den sich dann jeweils zur metallischen Schicht 11 ein Übergangsbereich mit einem Gradienten im Sauerstoffgehalt anschließt. Im Speziellen sinkt der Sauerstoffgehalt jeweils in Richtung zur metallischen Schicht 11 hin. Die Schichtdicken entsprechen dem Ausführungsbeispiel der Fig. 5 und 6. Demnach weisen die erste Schicht 9 und die metallische Schicht 11 eine Schichtdicke von 200 Nanometern, die Barriereschicht eine Schichtdicke von 100 Nanometern auf.

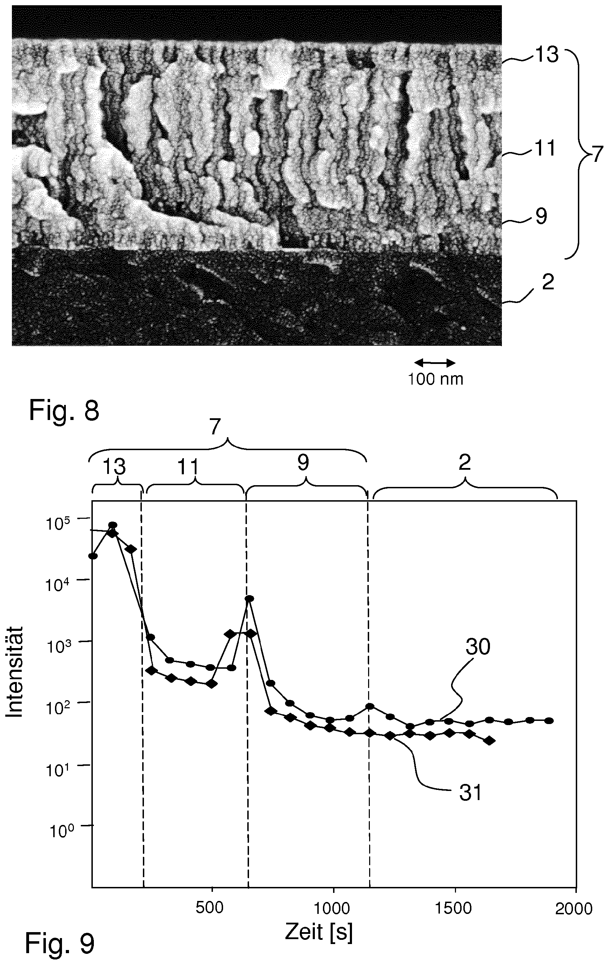

Fig. 8 zeigt wiederum eine rasterelektronenmikroskopische Aufnahme des Querschnitts der Beschichtung 7 an einer Bruchkante. Aufgrund des Gradienten im Sauerstoffgehalt lassen sich die Schichten 9, 11 und 13 hier nicht scharf voneinander abgrenzen. Auch hier ist aber zu erkennen, dass die Schichten 9 und 13 in den sauerstoffreichen und demgemäß von der metallischen Schicht 11 entfernten Bereichen eine feinkörnigere Struktur zeigen, als die metallische Schicht 11. Da die Schichten ohne scharfe Grenzflächen ineinander übergehen, ergibt sich ein Schichtverbund, der mechanische Spannungen, etwa durch unterschiedliche thermische Ausdehnungskoeffizienten sehr gut auffangen kann.

Fig. 9 zeigt eine SIMS-Tiefenprofilanalyse des Bestandteils FeO an einer Unterseitenbeschichtung mit einer TiO₂-Farbanpassungsschicht (erste Schicht 9), einer erfindungsgemäßen Edelstahlschicht (metallische Schicht 11) und einer Edelstahloxid-Schicht (Barriereschicht 13) vor und nach einer Temperaturbelastung. Die mit gestrichelten Linien gekennzeichneten Grenzflächen zwischen dem Glaskeramik-Material und den einzelnen Schichten der Beschichtung 7 können auch anhand der Intensitäten weiterer Bestandteile, wie etwa von TiO identifiziert werden. Fig. 9 zeigt zum Zwecke der Übersichtlichkeit aber nur FeO als Kennzeichen für den Oxidationsgrad der Beschichtung. Kurve 30 zeigt die Intensität des Bestandteils FeO vor dem Tempern, Kurve 31 die Intensität nach dem Tempern. Die Probe wurde dabei 100 Stunden bei einer Temperatur von 300 °C getempert. Wie anhand von Fig. 9 ersichtlich, zeigen sich keine signifikanten Änderungen hinsichtlich der Oxidation der Schichten 11, 13.

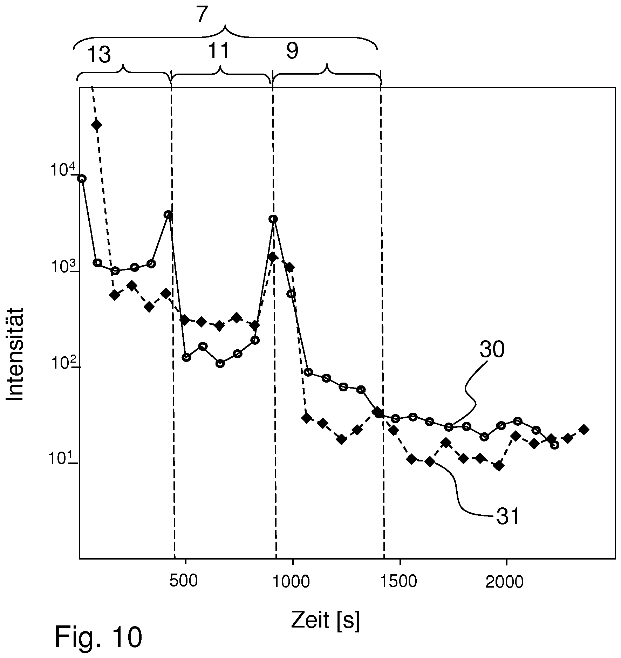

Es zeigt sich überraschend, dass das Oxid der Edelstahllegierung eine wesentlich bessere Barrierewirkung bereitstellt, als ein Nitrid der Legierung. Zum Vergleich zu Fig. 9 zeigt Fig. 10 SIMS-Profile eines entsprechenden Schichtsystems, bei welchem das Oxid der Barriereschicht 13 durch ein Nitrid der erfindungsgemäßen siliziumreichen Edelstahllegierung ersetzt ist. Die nach dem unter gleichen Bedingungen wie beim Ausführungsbeispiel der Fig. 9 durchgeführten Tempern aufgenommene Intensität 31 des FeO-Gehalts zeigt signifikante Änderungen. Zum einen wird die Barriereschicht 13 selbst an der Oberfläche oxidiert, wie anhand des starken Signals zu Beginn der Sputterzeit ersichtlich ist. Zum anderen steigt auch der Sauerstoffgehalt in der metallischen Schicht 11 an. Dies belegt, dass es im Verlauf der Temperaturbelastung zu einer chemischen Veränderung der Edelstahlschicht kommt. Damit können sichtbare Farbveränderungen einhergehen, welche zumindest unter ästhetischen Gesichtspunkten nachteilig sind, zumal die Temperaturbelastung einer Glaskeramik-Kochfläche aufgrund der Heizelemente entlang der Oberfläche stark unterschiedlich sind.

Bei den bisher anhand der Figuren beschriebenen Ausführungsbeispielen ist als erste Schicht jeweils eine erste Schicht in Form einer zumindest teiltransparenten Schicht 9 vorgesehen, welche in Kontakt mit der Glaskeramik ist und auf welcher die metallische Schicht 11 abgeschieden wurde. Wie weiter oben dargelegt, ist es aber auch möglich, die metallische Schicht 11 direkt auf der Glaskeramik, vorzugsweise durch Sputtern abzuscheiden. Damit entfällt zwar die Möglichkeit, den Farbeindruck, der beim Betrachten der Nutzseite der Glaskeramik-Kochplatte 1 entsteht, zu ändern oder zu korrigieren, allerdings ist dies auch nicht unbedingt erforderlich, wenn der gewünschte Farbton bereits durch die Kombination von Glaskeramik und darauf abgeschiedener Edelstahl-Schicht erzielt wird.

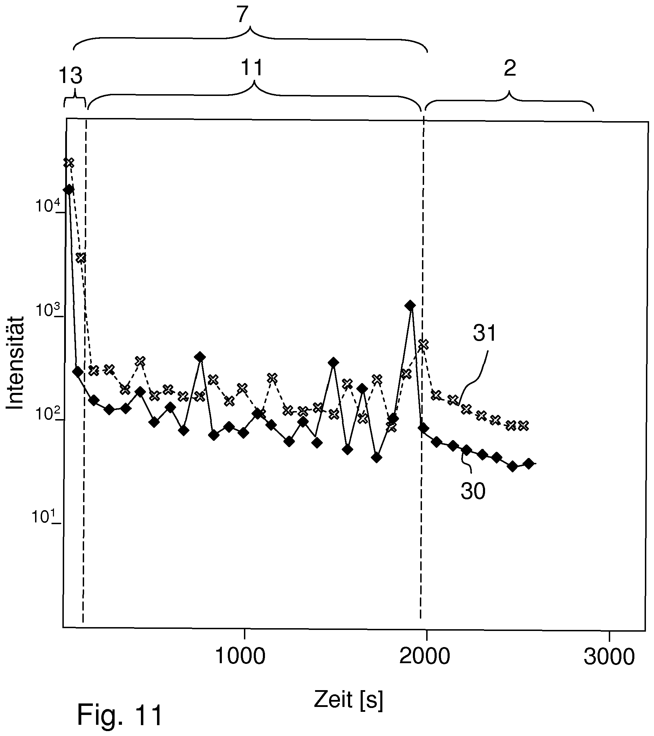

Auch die direkt auf die Glaskeramik aufgesputterte, erfindungsgemäß verwendete siliziumreiche Edelstahl-Legierung erweist sich trotz des hohen Unterschieds der Temperaturausdehnungskoeffizienten von Beschichtung und Glaskeramik als sehr temperaturbeständig. Fig. 11 zeigt dazu eine SIMS- Tiefenprofilanalyse einer Unterseitenbeschichtung vor und nach einer Temperaturbelastung, wobei die metallische Schicht 11 der mehrschichtigen Unterseitenbeschichtung 7 direkt auf der Glaskeramik 2 abgeschieden ist. Wie in den Figuren 9 und 10 ist wieder das Signal von abgesputterten FeO-Partikeln als Funktion der Sputterzeit aufgezeichnet. Kurve 31 zeigt die Intensität der FeO-Partikel nach einer Temperung von 100 Stunden bei 300 °C. Es ist zwar gegenüber der an einer nicht getemperten Vergleichsprobe aufgenommenen Kurve 30 eine geringfügige Zunahme des FeO-Gehalts zu bemerken, allerdings ist die Barriereschicht 13 hier auch sehr dünn. Der vergleichsweise geringere Anstieg gegenüber dem in Fig. 10 gezeigten Beispiel belegt aber auch hier die hohe Wirksamkeit der erfindungsgemäßen siliziumreichen Edelstahloxid-Barriereschicht.

Dass die Unterseitenbeschichtung mit einer metallischen Anmutung, wie sie die Erfindung in Form einer Kombination einer optional aber bevorzugt vorhandenen farbgebenden transparenten Schicht, einer metallischen Schicht einer siliziumhaltigen Edelstahllegierung und einem Oxid einer siliziumhaltigen Edelstahllegierung vorschlägt, sehr temperaturbeständig ist, belegt auch der Vergleich mit einer Chromschicht als Unterseitenbeschichtung. Ein vergleichbares Schichtsystem, bei welcher die metallische Schicht eine Chromschicht ist, wurde auf eine Temperatur von 500 °C erhitzt. Danach wurde eine Farbveränderung ΔE im xyY-Farbraum von 4,7 gegenüber dem Farbwert vor der Erhitzung festgestellt. Der Haze-Wert beträgt 35. Bei einer Erhitzung einer erfindungsgemäßen mehrschichtigen Beschichtung auf 500 °C wurde demgegenüber eine Farbveränderung ΔE im xyY-Farbraum von nur 0,35 gemessen. Der Haze-Wert beträgt 4. Im Allgemeinen wird angesetzt, dass eine Farbveränderung mit einem Abstand ΔE im xyY-Farbraum von kleiner 2 nicht wahrnehmbar ist. Von dieser Grenze ist ein erfindungsgemäßes Schichtsystem demgemäß weit entfernt, während die Farbveränderung bei einer Chromschicht sichtbar ist.

Es ist dem Fachmann ersichtlich, dass die Figuren lediglich beispielhaft sind. Insbesondere können die Ausführungsbeispiele auch miteinander kombiniert werden. So kann beispielsweise die als Gradientenschicht ausgebildete Barriereschicht gemäß Fig. 8 auch zusätzlich mit einer Si02-Schicht, wie sie in Fig. 4 gezeigt ist, abgedeckt werden, um die Barrierewirkung zu verbessern. Beispielsweise kann auch anstelle des im Ausführungsbeispiel der Fig. 4 vorgesehene Titanoxid als erster Schicht ein anderes, vorzugsweise hochbrechendes Oxid mit einem Brechungsindex größer als 2 verwendet werden, um eine Farbanpassung zu erreichen.

### Bezugszeichenliste

| | |
|---|---|
| Glaskeramik-Kochplatte | 1 |
| Glaskeramik-Material | 2 |
| Seiten von 1 | 3, 5 |
| Dekor | 4 |
| mehrschichtige Beschichtung | 7 |
| erste Schicht von 7 | 9 |
| metallische Schicht | 11 |
| Barriereschicht | 13 |
| weitere Barriereschicht | 14 |
| Öffnung in 1 | 20 |
| Gasbrenner | 22 |
| FeO-Gehalt vor Tempern | 30 |
| FeO-Gehalt nach Tempern | 31 |

## Patentansprüche

1. Beschichtete Glaskeramik-Kochplatte (1), deren eine Seite (3) eine Nutzseite und die gegenüberliegende Seite (5) die Unterseite bilden, wobei die Unterseite eine mehrschichtige Beschichtung (7) aufweist, und wobei die mehrschichtige Beschichtung (7) eine metallische Schicht (11) einer Legierung mit den Bestandteilen Chrom, Eisen, Nickel und Silizium aufweist, wobei der Silizium-Gehalt der Legierung mindestens 2 Atomprozent beträgt, und wobei die metallische Schicht (11) mit einer Barriereschicht (13) in Form eines Oxids einer Legierung mit den Bestandteilen Chrom, Eisen, Nickel und Silizium, deren Silizium-Gehalt mindestens 2 Atomprozent beträgt, abgedeckt ist, wobei der molare Sauerstoffgehalt der Barriereschicht (13) mindestens um einen Faktor 10 höher ist, als in der metallischen Schicht (11).

2. Glaskeramik-Kochplatte gemäß dem vorstehenden Anspruch, **dadurch gekennzeichnet, dass** die Barriereschicht (13) aus einem Oxid der Legierung der metallischen Schicht (11) gebildet ist.

3. Glaskeramik-Kochplatte gemäß dem vorstehenden Anspruch, **dadurch gekennzeichnet, dass** die Barriereschicht (13) als Gradientenschicht mit variierendem Sauerstoffgehalt ausgebildet ist, indem der Sauerstoffgehalt der Barriereschicht (13) in Richtung senkrecht zur Schicht und zur metallischen Schicht (11) hin kontinuierlich abnimmt.

4. Glaskeramik-Kochplatte gemäß einem der vorstehenden Ansprüche, wobei die mehrschichtige Beschichtung (7) eine erste, zumindest teiltransparente, ein- oder mehrlagige Schicht (9) auf der Glaskeramik aufweist, wobei auf dieser ersten, zumindest teiltransparenten Schicht (9) die metallische Schicht (11) abgeschieden ist.

5. Glaskeramik-Kochplatte gemäß dem vorstehenden Anspruch, **dadurch gekennzeichnet, dass** die erste Schicht (9) zumindest eines der Materialien Nb₂O₅, Ta₂O₅, Si₃N₄, ZrO₂, TiO₂ enthält.

6. Glaskeramik Kochplatte gemäß einem der Ansprüche 4 oder 5, **dadurch gekennzeichnet, dass** die erste Schicht (9) eine Lage aus einem Oxid der Legierung der metallischen Schicht (11) umfasst.

7. Glaskeramik-Kochplatte gemäß einem der Ansprüche 4 bis 6, **dadurch gekennzeichnet, dass** die erste Schicht (9) eine Schichtdicke von weniger als 400 Nanometern aufweist.

8. Glaskeramik-Kochplatte gemäß einem der vorstehenden Ansprüche, **gekennzeichnet durch** eine weitere Barriereschicht (14) aus einem von der an die metallische Schicht angrenzenden Barriereschicht (13) verschiedenem Material.

9. Glaskeramik-Kochplatte gemäß einem der vorstehenden Ansprüche, **dadurch gekennzeichnet, dass** die metallische Schicht (11) eine Austenit-Kristallstruktur aufweist.

10. Glaskeramik-Kochplatte gemäß einem der vorstehenden Ansprüche, **dadurch gekennzeichnet, dass** die Legierung der metallischen Schicht (11) folgende Bestandteile aufweist:
| | |
|---|---|
| Silizium: | 2 - 5 At%, |
| Chrom: | 22, 0 - 28, 0 At%, |
| Nickel: | 15,0 - 21,0 At%, |
| Eisen: | 48 - 56,0 At%. |

11. Glaskeramik-Kochplatte gemäß einem der vorstehenden Ansprüche, **dadurch gekennzeichnet, dass** der Kohlenstoff-Gehalt der metallischen Schicht (11) kleiner als 0,3 At% ist.

12. Verfahren zur Herstellung einer Glaskeramik-Kochplatte gemäß einem der vorstehenden Ansprüche, mit den Schritten
- Bereitstellen einer Glaskeramik-Platte,
- Aufsputtern einer metallischen Schicht (11) einer Legierung mit den Bestandteilen Chrom, Eisen, Nickel und Silizium, wobei der Silizium-Gehalt der Legierung mindestens 2 Atomprozent beträgt,
- Herstellen einer Barriereschicht (13), welche die metallische Schicht (11) bedeckt, in Form eines Oxids einer Legierung mit den Bestandteilen Chrom, Eisen, Nickel und Silizium, deren Silizium-Gehalt mindestens 2 Atomprozent beträgt, wobei der molare Sauerstoffgehalt der Barriereschicht (13) mindestens um einen Faktor 10 höher ist, als in der metallischen Schicht (11).

13. Verfahren gemäß dem vorstehenden Anspruch, **dadurch gekennzeichnet, dass** die Barriereschicht (13) durch reaktives Sputtern eines Komposit-Targets, insbesondere eines Edelstahl-Targets in einer sauerstoffhaltigen Atmosphäre abgeschieden wird.

14. Verfahren gemäß dem vorstehenden Anspruch, wobei während des Aufsputterns der ersten Schicht (9) oder der Barriereschicht (13) der Sauerstoffgehalt des Prozessgases variiert wird, so dass eine Gradientenschicht ausgebildet wird, welche einen in Richtung zur metallischen Schicht (11) hin abnehmenden Sauerstoffgehalt aufweist.

15. Verfahren gemäß einem der Ansprüche 12 bis 14, **dadurch gekennzeichnet, dass** die mehrschichtige Beschichtung (7) mit der Barriereschicht (13) mit einer oberflächlichen Erwärmung nachbehandelt wird, so dass ein Temperaturgradient innerhalb der obersten 100 Nanometern der Beschichtung (7) von mindestens 200 K auftritt.

## Claims

1. A coated glass-ceramic hot plate (1), one surface (3) of which forms a usable surface and the opposite surface (5) forms the bottom surface, wherein the bottom surface has a multi-layer coating (7), and wherein the multi-layer coating (7) has a metallic layer (11) of an alloy with the constituents chromium, iron, nickel, and silicon, wherein the silicon content of the alloy is at least 2 atomic percent, and wherein the metallic layer (11) is covered with a barrier layer (13) in the form of an oxide of an alloy with the constituents chromium, iron, nickel, and silicon, of which the silicon content is at least 2 atomic percent, wherein the molar oxygen content of the barrier layer (13) is higher than in the metallic layer (11) by at least a factor of 10.

2. The glass-ceramic-hot plate according to the preceding claim, **characterized in that** the barrier layer (13) is formed from an oxide of the alloy of the metallic layer (11) .

3. The glass-ceramic hot plate according to the preceding claim, **characterized in that** the barrier layer (13) is configured as a gradient layer with varying oxygen content, **in that** the oxygen content of the barrier layer (13) continually decreases in a direction perpendicular to the layer and toward the metallic layer (11).

4. The glass-ceramic hot plate according to any one of the preceding claims, wherein the multilayer coating (7) has a first, at least partially transparent, monolayer- or multilayer layer (9) on the glass-ceramic, wherein the metallic layer (11) is deposited on this first, at least partially transparent layer (9) .

5. The glass-ceramic-hot plate according to the preceding claim, **characterized in that** the first layer (9) contains at least one of the materials Nb₂O₅, Ta₂O₅, Si₃N₄, ZrO₂, TiO₂.

6. The glass-ceramic hot plate according to one of claims 4 or 5, **characterized in that** the first layer (9) comprises a layer of an oxide of the alloy of the metallic layer (11).

7. The glass-ceramic hot plate according to one of claims 4 through 6, **characterized in that** the first layer (9) has a layer thickness of less than 400 nanometres.

8. The glass-ceramic-hot plate according to any one of the preceding claims, **characterized by** another barrier layer (14) of a material different from the barrier layer (13) adjacent to the metallic layer.

9. The glass-ceramic-hot plate according to any one of the preceding claims, **characterized in that** the metallic layer (11) has an austenitic crystal structure.

10. The glass-ceramic-hot plate according to any one of the preceding claims, **characterized in that** the alloy of the metallic layer (11) has the following constituents:
| | |
|---|---|
| silicon: | 2 - 5 at.%, |
| chromium: | 22.0 - 28.0 at.%, |
| Nickel: | 15.0 - 21.0 at.%, |
| Iron: | 48- 56.0 at.%. |

11. The glass-ceramic hot plate according to any one of the preceding claims, **characterized in that** the carbon content of the metallic layer (11) is less than 0.3 at.%.

12. A method for producing a glass-ceramic hot plate according to any one of the preceding claims, with the steps
- Provision of a glass-ceramic-plate,
- Sputtering deposition of a metallic layer (11) of an alloy with the constituents chromium, iron, nickel and silicon, wherein the silicon content of the alloy is at least 2 atomic percent,
- Production of a barrier layer (13), which covers the metallic layer (11), in the form of an oxide of an alloy with the constituents chromium, iron, nickel and silicon, the silicon content of which is at least 2 atomic percent, wherein the molar oxygen content of the barrier layer (13) is higher than in the metallic layer (11) by at least a factor of 10.

13. The method according to the preceding claim, **characterized in that** the barrier layer (13) is deposited by reactive sputtering of a composite target, particularly a stainless steel target, in an oxygen-containing atmosphere.

14. The method according to the preceding claim, wherein the oxygen content of the process gas is varied during the sputtering of the first layer (9) or of the barrier layer (13) so that a gradient layer is formed, which has an oxygen content diminishing in a direction toward the metallic layer (11).

15. The method according to any one of claims 12 through 14, **characterized in that** the multilayer coating (7) with the barrier layer (13) is post-treated by superficial heating so that a temperature gradient of at least 200 K arises within the uppermost 100 nanometres of the coating (7).

## Revendications

1. Plaque de cuisson (1) recouverte de vitrocéramique comprenant une face (3) formant un côté d'utilisation et l'autre face opposée (5) formant une surface inférieure, la face inférieure présentant un revêtement multicouche (7) et le revêtement multicouche (7) présentant une couche métallique (11) d'un alliage comprenant les composants chrome, fer, nickel et silicium, la teneur en silicium de l'alliage s'élevant à au moins 2 % atomiques et la couche métallique (11) étant recouverte d'une couche barrière (13) sous forme d'un oxyde d'un alliage comprenant les composants chrome, fer, nickel et silicium, dont la teneur en silicium s'élève à au moins 2 % atomiques et la teneur molaire en oxygène de la couche barrière (13) étant supérieure d'au moins un facteur 10 à celle de la couche métallique (11).

2. Plaque de cuisson vitrocéramique selon la revendication précédente, **caractérisée en ce que** la couche barrière (13) est constituée d'un oxyde de l'alliage de la couche métallique (11).

3. Plaque de cuisson vitrocéramique selon la revendication précédente, **caractérisée en ce que** la couche barrière (13) est formée sous forme de couche à gradient ayant une teneur variable en oxygène en diminuant en continu la teneur en oxygène de la couche barrière (13) dans une direction perpendiculaire à la couche et à la couche barrière (11).

4. Plaque de cuisson vitrocéramique selon l'une des revendications précédentes, le revêtement multicouche (7) présentant une première couche (9) au moins partiellement transparente et composée d'une ou de plusieurs épaisseurs sur la vitrocéramique, la plaque métallique (11) étant déposée sur cette première couche (9) au moins partiellement transparente.

5. Plaque de cuisson vitrocéramique selon la revendication précédente, **caractérisée en ce que** la première couche (9) contient au moins l'une des matières Nb₂O₅, Ta₂O₅, Sl₃N₄, ZrO₂ et TiO₂.

6. Plaque de cuisson vitrocéramique selon l'une des revendications 4 ou 5, **caractérisée en ce que** la première couche (9) comprend une épaisseur constituée d'un oxyde de l'alliage de la couche métallique (11).

7. Plaque de cuisson vitrocéramique selon l'une des revendications 4 à 6, **caractérisée en ce que** la première couche (9) présente une épaisseur inférieure à 400 nanomètres.

8. Plaque de cuisson vitrocéramique selon l'une des revendications précédentes, **caractérisée par** une autre couche barrière (14) constituée d'un matériau différent de celui de la couche barrière (13) adjacente à la couche métallique.

9. Plaque de cuisson vitrocéramique selon l'une des revendications précédentes, **caractérisée en ce que** la couche métallique (11) présente une structure cristalline austénitique.

10. Plaque de cuisson vitrocéramique selon l'une des revendications précédentes, **caractérisée en ce que** l'alliage de la couche métallique (11) contient les composants suivants :
| | |
|---|---|
| Silicium : | 2 à 5 % at, |
| Chrome : | 22,0 à 28,0 % at, |
| Nickel : | 15,0 à 21,0 % at, |
| Fer : | 48 à 56,0 % at. |

11. Plaque de cuisson vitrocéramique selon l'une des revendications précédentes, **caractérisée en ce que** la teneur en carbone de la couche métallique (11) est inférieure à 0,3 % at.

12. Procédé pour fabriquer une plaque de cuisson vitrocéramique selon l'une des revendications précédentes, comprenant les étapes suivantes consistant à :
- fournir une plaque en vitrocéramique,
- déposer par pulvérisation une couche métallique (11) d'un alliage comprenant les composants chrome, fer, nickel et silicium, la teneur en silicium de l'alliage s'élevant à au moins 2 % atomiques,
- produire une couche barrière (13) qui recouvre la couche métallique (11), sous la forme d'un oxyde d'un alliage comprenant les composants chrome, fer, nickel et silicium, dont la teneur en silicium s'élève à au moins 2 % atomiques, la teneur molaire en oxygène de la couche barrière (13) étant supérieure d'au moins un facteur 10 à celle de la couche métallique (11).

13. Procédé selon la revendication précédente, **caractérisé en ce que** la couche barrière (13) est déposée par pulvérisation réactive d'une cible composite, en particulier d'une cible en acier inoxydable sous une atmosphère contenant de l'oxygène.

14. Procédé selon la revendications précédente, dans lequel, pendant le dépôt par pulvérisation de la première couche (9) ou de la couche barrière (13), la teneur en oxygène du gaz de traitement varie de manière à ce qu'il se forme une couche à gradient présentant une teneur en oxygène diminuant en direction de la couche métallique (11).

15. Procédé selon l'une des revendications 12 à 14, **caractérisé en ce que** le revêtement multicouche (7) avec la couche barrière (13) est soumis à un traitement thermique en surface, de manière à obtenir un gradient de température d'au moins 200 K à l'intérieur des 100 nanomètres les plus en surface du revêtement (7).
